# EUROPÄISCHE PATENTSCHRIFT

(11) **EP 1 046 915 B1**
(45) Veröffentlichungstag und Bekanntmachung des Hinweises auf die Patenterteilung: **21.11.2012**
(21) Anmeldenummer: 00106311.4
(22) Anmeldetag: 23.03.2000
(51) Int. Cl.: G01N 35/02, B65D 45/00, B01L 3/14, G01N 35/10

(54) **Analysengerät mit Vorrichtung zum Öffnen und Schliessen von Reagenzbehältern**
Analysing apparatus with device for opening and closing reagent containers
Dispositif d'analyse comprenant des moyens permettant d'ouvrir et de fermer des récipients pour réactifs

(30) Priorität: 19.04.1999 DE 19917646
(43) Veröffentlichungstag der Anmeldung: 25.10.2000
(73) Patentinhaber: Siemens Healthcare Diagnostics Products GmbH, 35041 Marburg (DE)
(72) Erfinder: Otto, Ralf, 65195 Wiesbaden (DE); Wilmes, Hugo, 65812 Bad Soden (DE); Sänger, Hans Dieter, 65527 Niedernhausen (DE)

(56) Entgegenhaltungen:
- EP-A- 0 523 425
- EP-A- 0 703 457
- DE-A- 3 204 584
- DE-A- 3 346 517
- DE-A- 19 746 169
- US-A- 5 578 494

## Beschreibung

Gegenstand der Erfindung ist eine Vorrichtung zum Öffnen und Schließen eines Reagenzbehälterverschlusses in einem teil- oder vollautomatischen Analysengerät, sowie das mittels dieser Vorrichtung angewendete Verfahren zum Öffnen und Schließen eines Reagenzbehälterverschlusses in einem teil- oder vollautomatischen Analysengerät

Teil- oder vollautomatischen Analysengeräte werden in der medizinischen Diagnostik, aber auch in anderen Bereichen, z.B. in der Analytik, in großem Umfange eingesetzt. Diese Geräte bestehen im wesentlichen aus 3 Bauteilen, einem Reagenzteil, einem Probenteil und einen Analysenteil. Im Reagenzteil werden eine bestimmte Anzahl von Reagenzien in Reagenzbehältern vorgehalten. Die Reagenzien müssen soweit wie möglich hermetisch verschlossen sein um z.B. Kontaminationen und Verdunstung zu verhindern. Im Probenteil werden eine bestimmte Anzahl von Proben vorgehalten. Auch die Proben sollten gegebenenfalls aus Sicherheitsgründen, z.B. Kontamination und potentielle Infektionsgefährdung, soweit wie möglich luftdicht abgeschlossen sein. Darüber hinaus ist es vorteilhaft, die einzelnen Kompartimente, das heißt, z.B. den gesamten Reagenzteil bzw. Probenteil, gegen Verunreinigungen, durch einen Deckel zu sichern. Der notwendige Transfer von Flüssigkeiten zwischen den einzelnen Teilen erfolgt in der Regel durch Transferpipetten, die je nach Notwendigkeit in X-, Z- und/ oder Y-Richtung und/ oder in phi-Richtung (Winkeldrehung) beweglich sind. Der Antrieb erfolgt dabei häufig durch Schrittmotoren, wobei jeweils ein Motor für jede Bewegungsrichtung vorgesehen ist. Bedingt durch die unterschiedlichen Füllvolumina und die unterschiedliche Ausformung der Reagenz- und! oder Probenbehälter - Reagenz- und Probenbehätter werden im weiteren allgemein als Reagenzbehälter bezeichnet - ist die maximale Bewegung in Z-Richtung unter Umständen sehr erheblich; sie kann z.B. von 10 bis 200 mm betragen.

Diese Anforderungen haben zu unterschiedlichen Lösungsvorschlägen für die Ausgestaltung von Reagenzbehälterverschlüssen geführt. Zu unterscheiden sind dabei zwei Lösungsgruppen, zum einen "passive" Systeme, bei denen der Reagenzbehälterverschluß so ausgestaltet ist, daß der Wiederverschluß durch die Elastizität des Verschlußmaterials gewährleistet sein sollte, wie z.B. bei in der EP 0 509 281 vorgeschlagen, zum anderen "aktive" Systeme, bei denen die Öffnung und der Verschluß aktiv erfolgen muß, wie z.B. in der EP 0 543 638 beschrieben. Hier wird allerdings keine Lösungsmöglichkeit angegeben, wie der beschriebene Verschluß geöffnet, bzw. geschlossen werden kann. In der älteren Anmeldung DE 197 46 169 wird ein aktiver Reagenzbehälterverschluß beschrieben, der durch einen Stößel bewegt wird, allerdings wird auch hier keine Möglichkeit angegeben, wie diese Bewegung ausgeführt werden kann. In der Praxis ergeben sich dabei durch den Kompartimentdeckel zusätzliche Probleme. Die Reagenzbehälter sollten aus den oben angeführten Gründen auch nur unmittelbar während der Entnahme geöffnet sein. Beispiele für Vorrichtungen zum Öffnen und Schließen von Behältern in Analysegeräten sind auch in den folgenden im europäischen Recherchebericht genannten Dokumenten zu finden: DE 32 04 584 A, DE 33 46 517 A, US 5 578 494 A, EP 0 703 457 A und EP 0 523 425 A.

Der vorliegenden Erfindung liegt daher die Aufgabe zugrunde, ein möglichst einfaches Verfahren zur Betätigung eines aktiven Reagenzbehälterverschlusses zu finden. Gleichzeitig sollte das Verfahren so gestaltet sein, daß die für das Verfahren notwendigen Vorrichtungen gegebenenfalls auch an schon existierenden Geräten nachgerüstet werden können.

Diese Aufgabe wird gelöst durch eine Vorrichtung, die im wesentlichen die bereits vorhandenen vertikalen Bewegungsabläufe des Pipettennadelträgers (4) ausnutzt ohne dabei die Bewegungsfreiheit der Pipettiernadel zu beeinträchtigen.

Vorteilhafterweise wird dabei die Aufwärtsbewegung des Pipettenträgers genutzt, indem die Aufwärtsbewegung des Pipettenträgers mittels eines, dem Fachmann an sich bekannten, die Bewegungsrichtung umkehrenden Mittels auf den Stößel (11) übertragen wird, der dadurch aus der Ruheposition nach unten in die Arbeitsposition bewegt wird. Durch die Nutzung der Aufwärtsbewegung kann der Stößelhub unabhängig von der Eintauchtiefe der Pipettiernadel gestaltet werden.

Es ist dem Fachmann bekannt, daß z.B. die Kraftübertragung auf vielfältige Art - z.B. durch einen geeigneten Hebelmechanismus, einen Zugmitteltrieb, eine hydraulische Vorrichtung oder einen Bowdenzug - erfolgen kann, so daß die im folgenden beschriebenen Ausführungsformen die Erfindung nur erläutern, aber in keiner Weise einschränken sollen.

### Kurzbeschreibung der Figuren:

- Fig. 1): Transfervorrichtung mit Kipphebelmechanismus in Verfahrposition;
- Fig. 2): Transfervorrichtung in Transferposition, Pipettiernadelträger (4) in Verfahrposition, Stößel (11) in Ruheposition;
- Fig. 3): Pipettiernadelträger (4) in oberer Position, Stößel (11) in Arbeitsposi tion;
- Fig. 4): Stößel (11) in Arbeitsposition, Reagenzbehälterträger (16) in Bewegung;
- Fig. 5): Reagenzbehälterverschluß (13) geöffnet, Pipettiernadel in Pipettierposition;
- Fig. 6): Pipettiernadelträger (4) in oberer Position, Stößel (11) in Arbeitsposi tion;
- Fig. 7): Pipettiernadelträger (4) in oberer Position, Stößel (11) in Arbeitsposition, Reagenzbehälterverschluß (13) geschlossen, Mitnehmer (15) elastisch ausgelenkt;
- Fig. 8): Transfervorrichtung schwenkt in Verfahrposition, Pipettiernadelträger (4) in Verfahrposition, Stößel (11) in Ruheposition;
- Fig. 9): Transfervorrichtung mit Zahnriemen (26) in Transferposition Pipettiernadelträger (4) in oberer Position, Stößel (11) in Arbeitsposition;
- Fig.10): Transfervorrichtung in Verfahrposition, Pipettiernadelträger in Verfahrposition, Schubplatte (27) in Ruheposition;
- Fig.11): Reagenzbehälterverschluß (13) geöffnet, Pipettiernadel in Pipettierposition, Stößel (11) in Ruheposition;
- Fig.12): Reagenzbehälterverschluß (13), zerlegt in Reagenzbehälterverschlußdeckel (14) und Reagenzbehälterverschlußkörper (19);
- Fig.13): Reagenzbehälter (12) mit Reagenzbehälterverschluß (13) geöffnet;

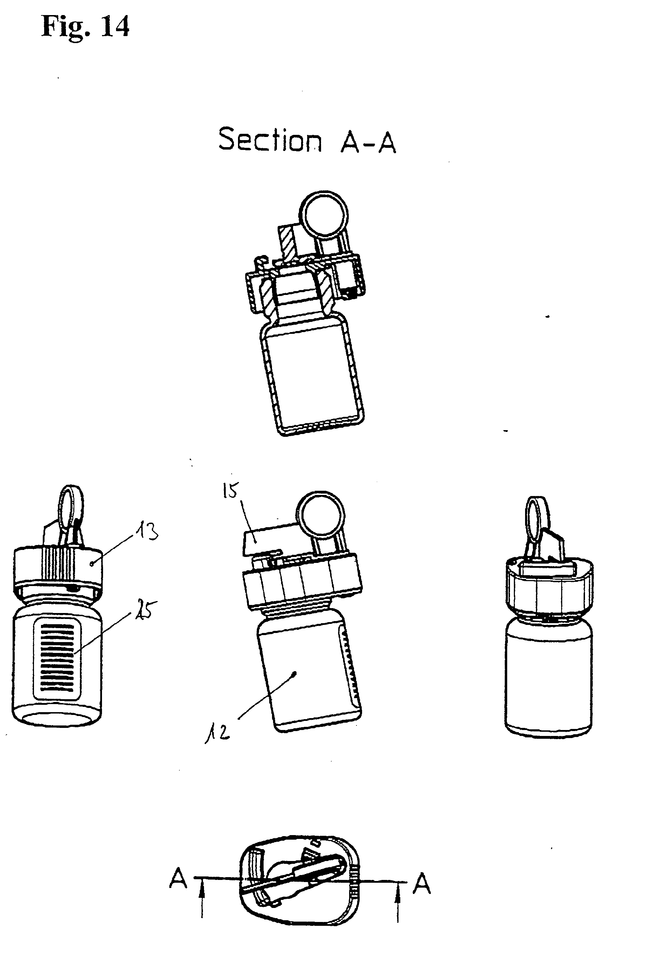

- Fig.14): Reagenzbehälter (12) mit Reagenzbehälterverschluß (13) geschlossen;

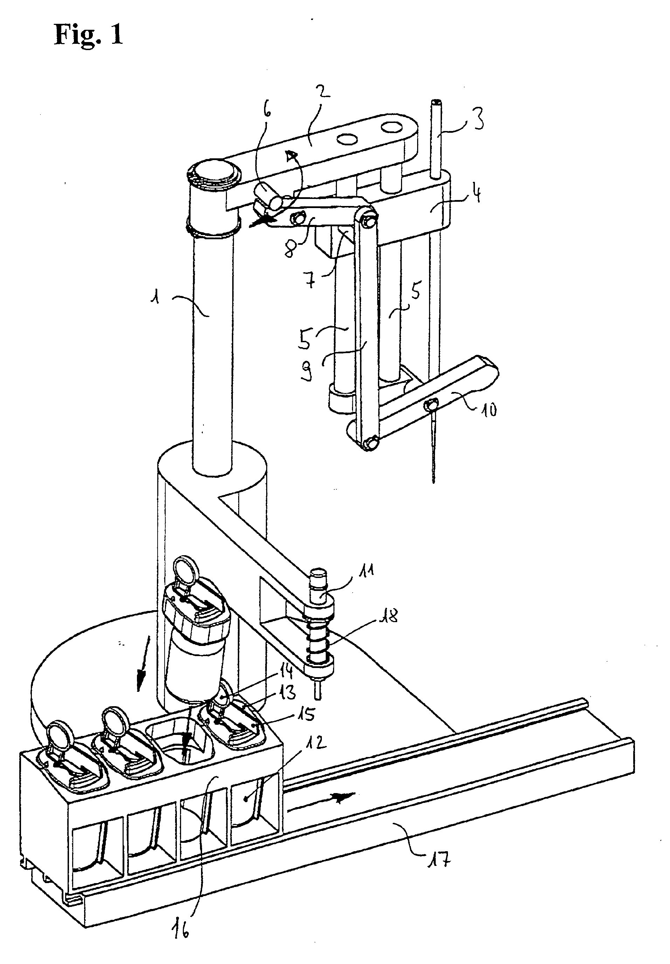

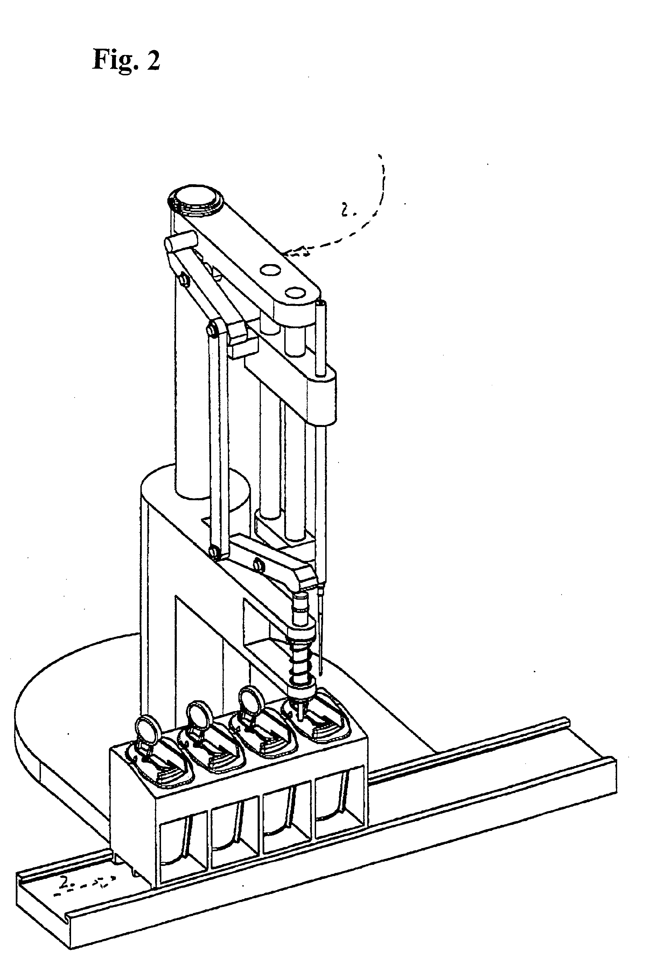

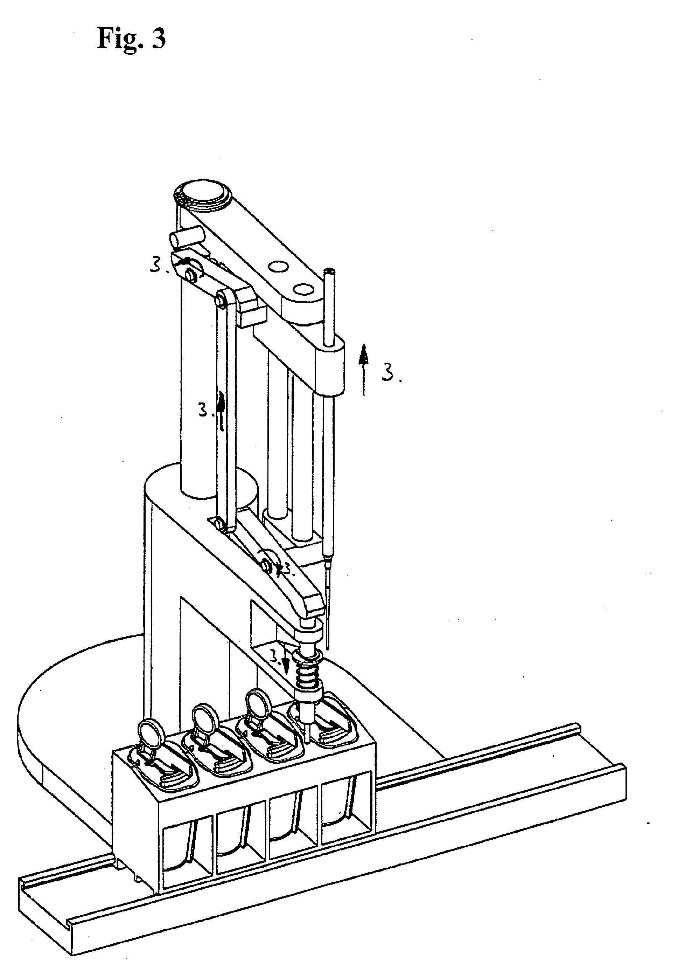

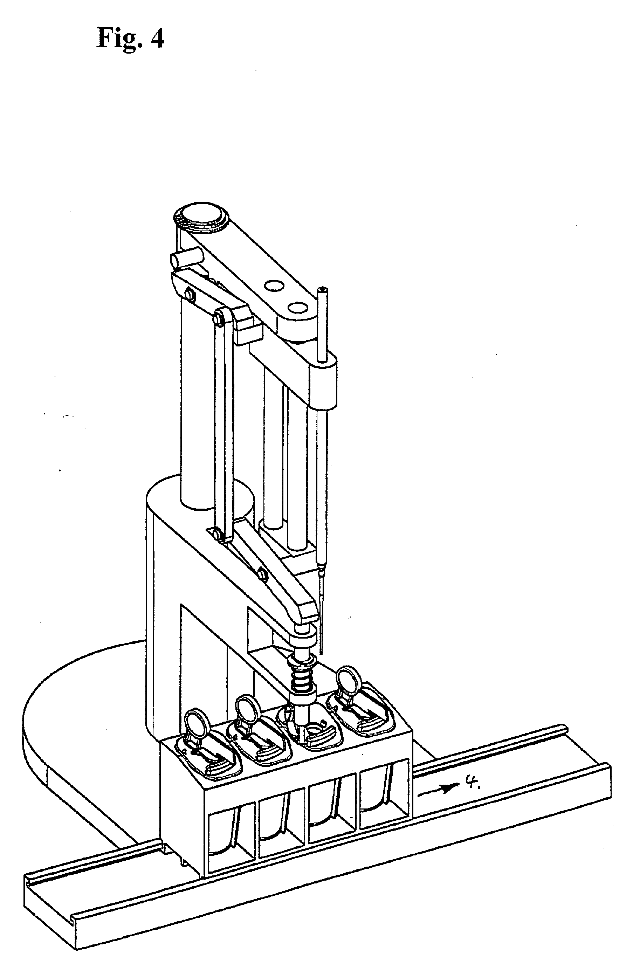

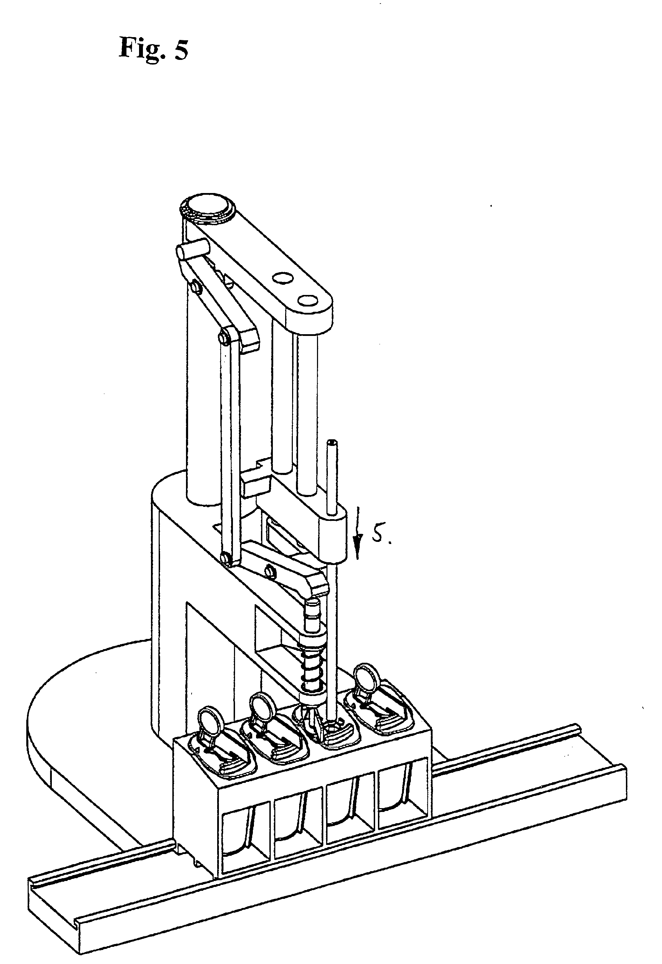

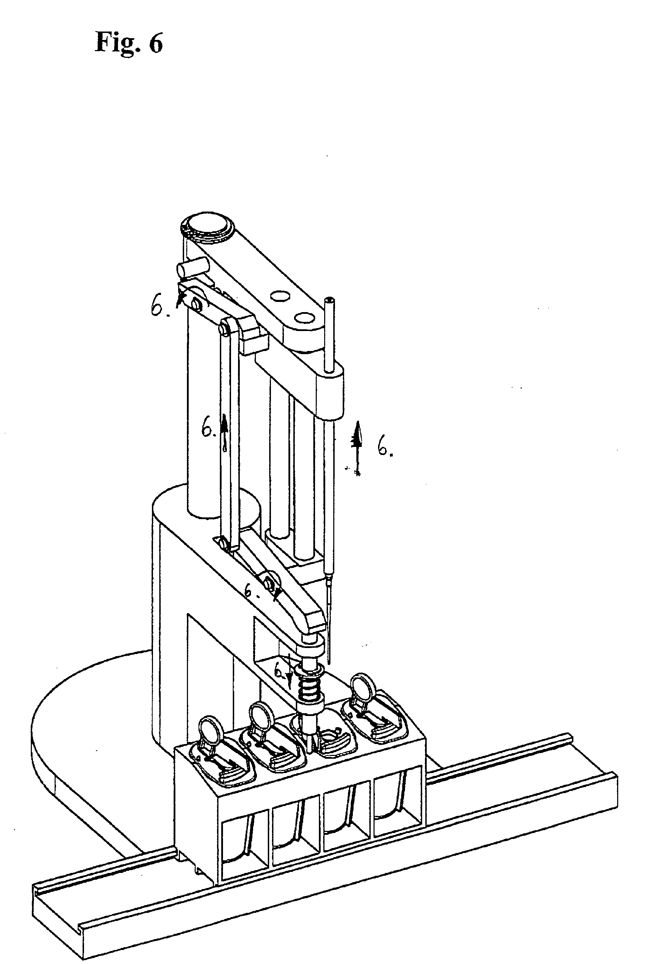

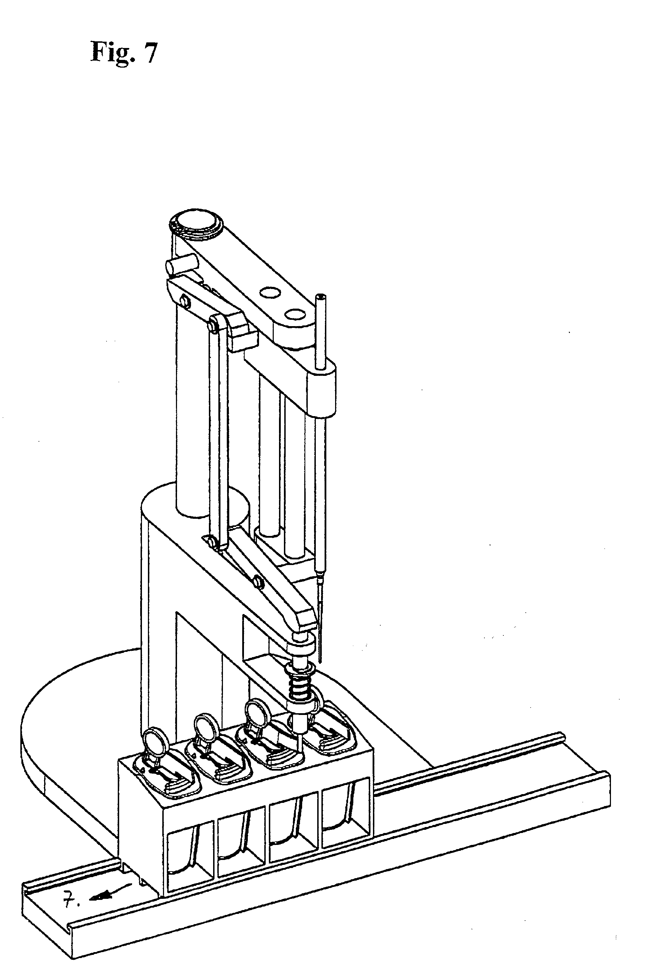

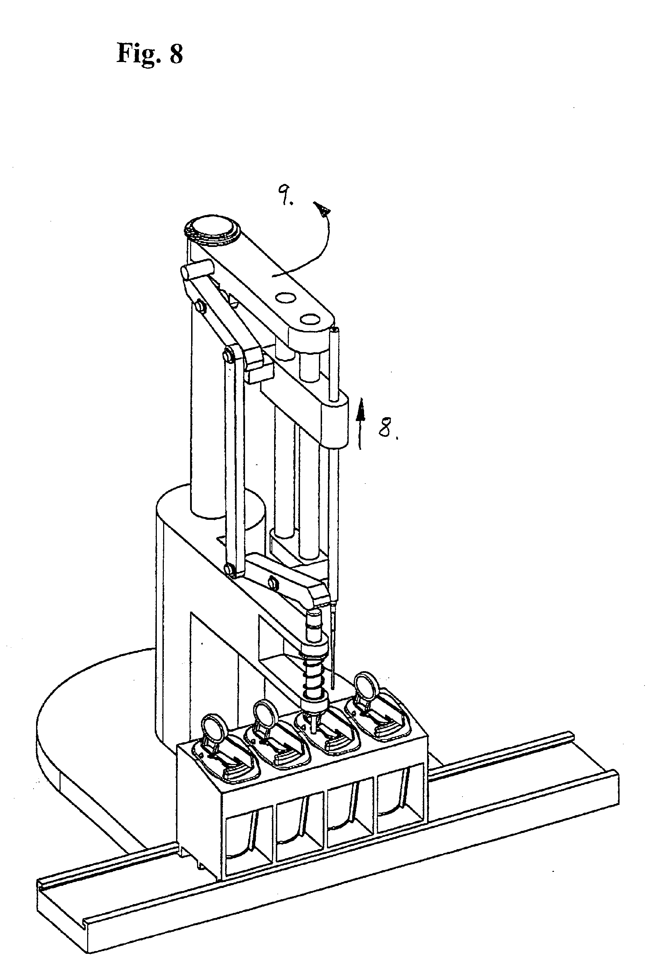

Eine Ausführungsform der erfindungsgemäßen Vorrichtung ist exemplarisch in den Figuren 1 bis 8 beschrieben.
1) die an einem Tragarm (2) aufgehängte Pipettiernadel (3) wird in eine Position oberhalb der, zu diesem Zeitpunkt noch verschlossenen Öffnung des Reagenzbehälters (12) bewegt;
2) der Pipettiernadelträger (4) wird aus der Verfahrposition nach oben bewegt, dabei wird über den Mitnehmer (7) den Kipphebel I (8), die Stoßstange (9) und den Kipphebel II (10) die Bewegung auf den Stößel (11) übertragen, der dadurch aus der Ruheposition in die Arbeitsposition bewegt wird;
3) durch die Bewegung des Reagenzbehälter relativ zum Stößel wird, durch über den Mitnehmer (15) der Deckel des Reagenzbehälterverschlusses geöffnet und der Reagenzbehälter in die Entnahmeposition gefahren;
4) durch die Abwärtsbewegung des Pipettiernadelträgers (4) wird in Umkehr der Bewegung aus Schritt 2) Stößel (11) mittels Federkraft wieder in die Ruheposition bewegt;
5) die Pipettiernadel (3) entnimmt das Transfergut;
6) durch die anschließende Aufwärtsbewegung des Pipettiernadelträgers (4) erfolgt erneut der Bewegungsablauf aus Schritt 2) wodurch Stößel (11) aus der Ruheposition in die Arbeitsposition bewegt wird,
7) durch eine geeignete Bewegung des Reagenzbehälter relativ zum Stößel wird über den Mitnehmer (15) der Deckel des Reagenzbehälterverschlusses geschlossen und der Reagenzbehälter in eine Ruheposition gefahren;
8) die Transfereinrichtung ist nunmehr bereit für den nächsten Transfervorgang.

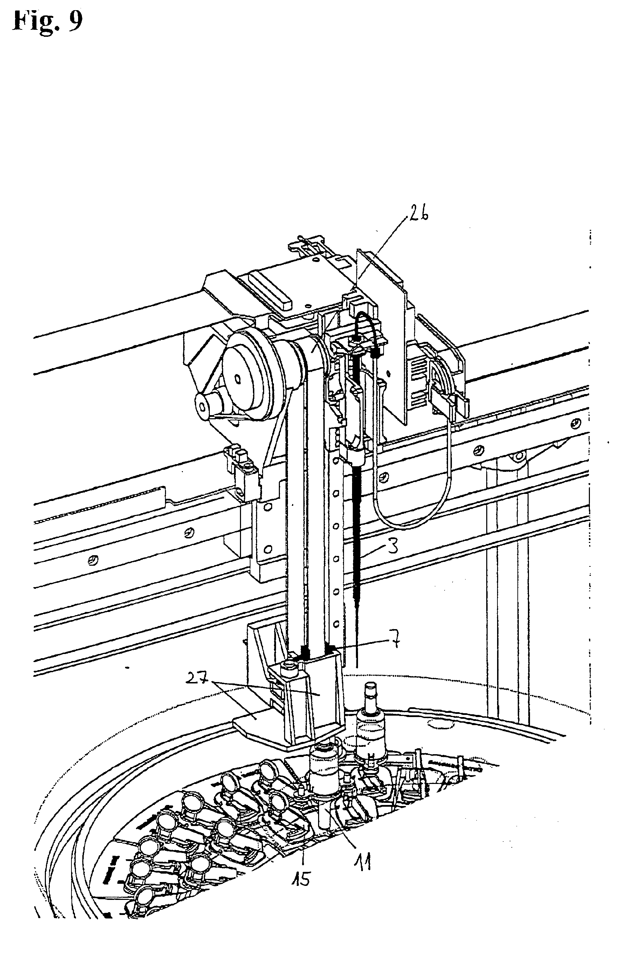

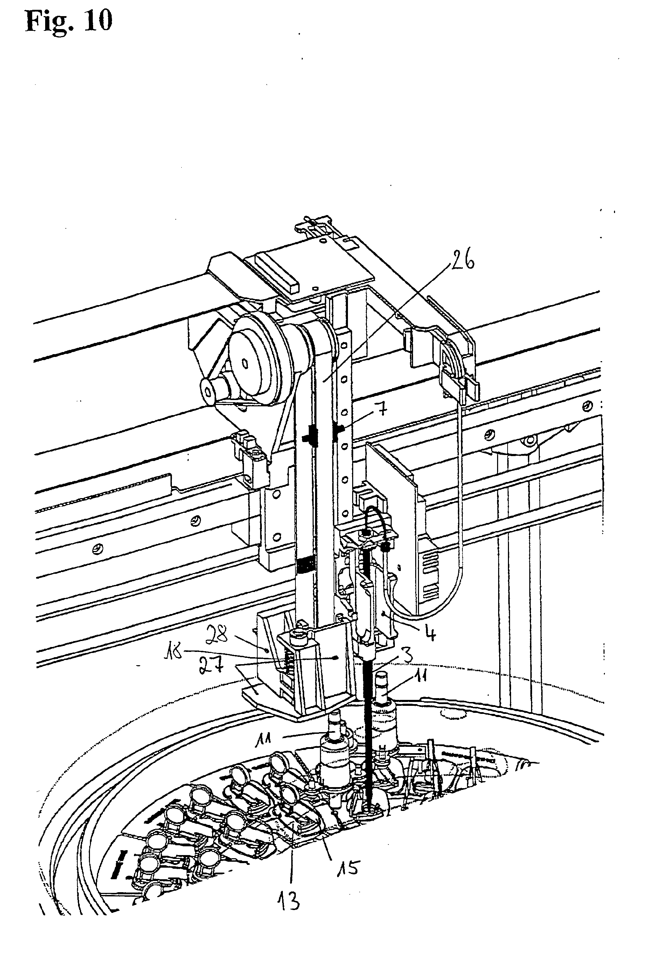

Die Figuren 9 und 10 zeigen eine weitere vorteilhafte Ausgestaltungsform der erfindungsgemäßen Vorrichtung. Analog zu der vorherbeschriebenen exemplarischen Ausführungsform wird hier die Bewegung des Zahnriemens (26), der den Pipettiernadelträger (4) bewegt, ausgenutzt um den Stößel (11) zu bewegen.

Weitere Ausführungsformen sind in den Patentansprüchen beschrieben.

Der Pipettiernadelträger (4) wird aus der Verfahrposition nach oben bewegt, dabei wird über den Mitnehmer (7) und eine Schubplatte (27) die Bewegung auf den Stößel (11) übertragen, der dadurch aus der Ruheposition in die Arbeitsposition bewegt wird.

Durch die Verwendung einer Schubplatte kann auch ein Stößel, der sich in einer räumlichen Distanz zur Entnahmeposition befindet, bewegt werden, so daß man dadurch eine größere Freiheit in der Gestaltung der tatsächlichen Ausführungsform der Erfindung gewinnt.

Die Reagenzbehälterverschlüsse können vielfältig gestaltet sein. So werden z.B. in der EP 0 543 638 Reagenzbehälterverschlüsse beschrieben, die durch einen Kippmechanismus geöffnet werden, der durch den erfindungsgemäßen Stößel (10) bewegt werden kann. In der DE 197 46 169 werden Reagenzbehälterverschlüsse beschrieben, die im wesentlichen dadurch gekennzeichnet sind, daß die Deckel mittels eines schräggestellten bistabilen Scharniers seitlich nach oben schwenkbar sind.

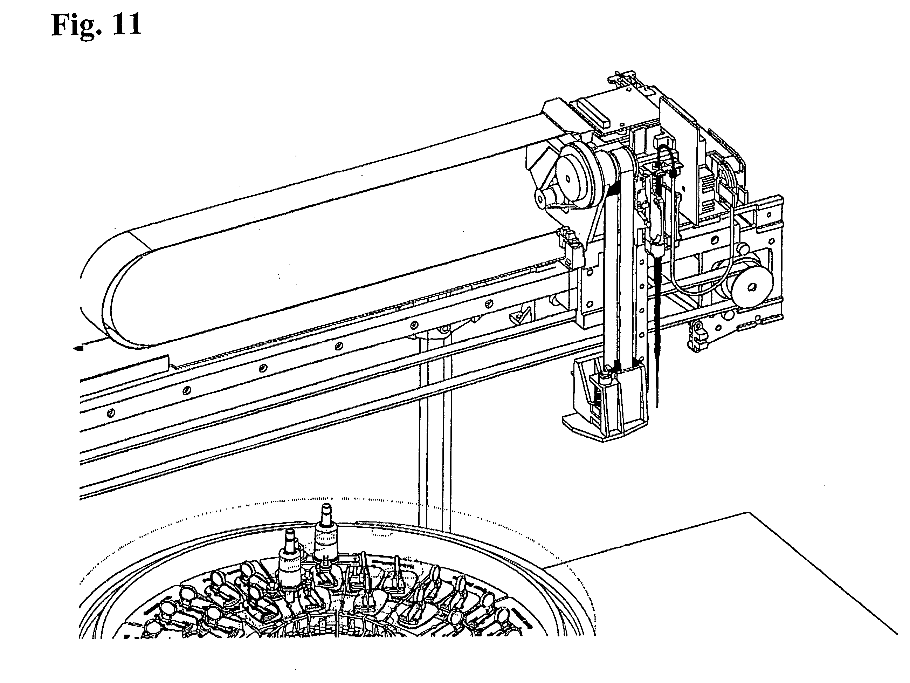

Vorteilhafterweise kann man auch z.B. die in Figur 9 bis 11 dargestellten zweiteiligen Reagenzbehälterverschlüsse verwenden. Der Reagenzbehälterverschluß (13) besteht aus einem Reagenzbehälterverschlußdeckel (14) und dem Reagenzbehälterverschlußkörper (19). Verbunden werden beide Teile durch eine Steckachse (20). Als Material verwendet man vorteilhafterweise einen teilelastischen Kunststoff wie z.B. Polypropylen für den Reagenzbehälterverschlußdeckel (14) und Polyethylen für den Reagenzbehälterverschlußkörper (19). Durch die im wesentlichen horizontale Bewegung des Deckels in einer Ebene kann dieser Reagenzbehälterverschluß sehr einfach gebaut sein. Vorteilhafterweise erfolgt die Abdichtung der Öffnung (21) durch den Deckel (22) durch eine kugelabschnittsförmige Ausbildung der Dichtung (21/22).

Ein besonders dichter Verschluß des Deckels läßt sich erreichen, wenn am Deckel eine Nase (23) angebracht ist, die in einer Führung (24) läuft und dadurch eine druckbelastete Dichtung zwischen dem Deckel und der Öffnung (21) sicherstellt.

Durch die vorteilhafte Ausgestaltung der kugelabschnittsförmigen Abdichtung kann auf einen speziellen Dichteinsatz verzichtet werden.

Die Zuverlässigkeit der Analysenergebnisse kann mittels des erfindungsgemäßen Reagenzbehälterverschluß auch optisch noch weiter dadurch erhöht werden, daß die für einen bestimmten Nachweis erforderlichen Reagenzien mit gleichfarbigen Reagenzbehälterverschlüssen versehen werden.

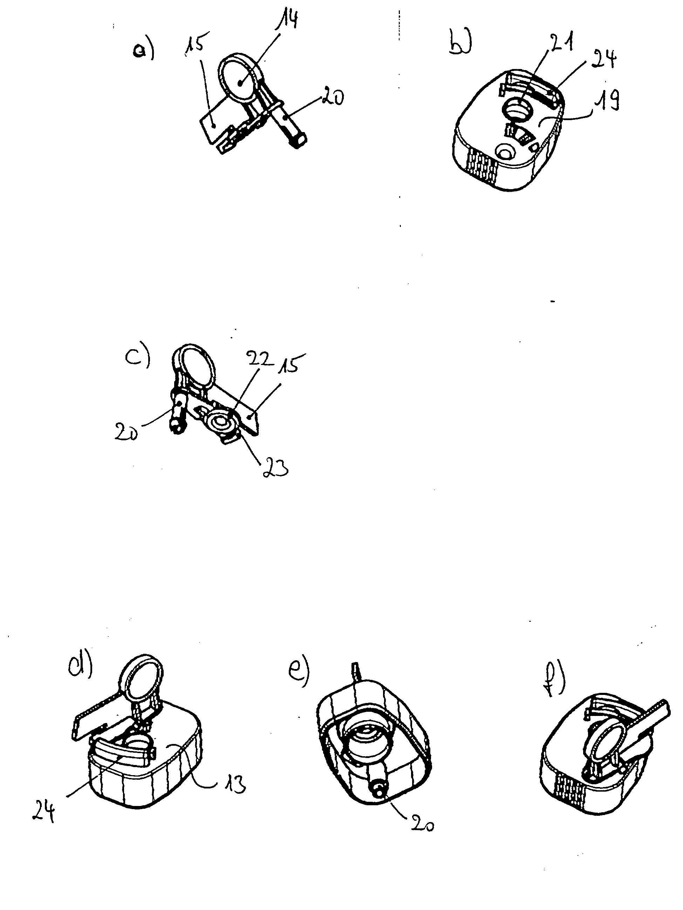

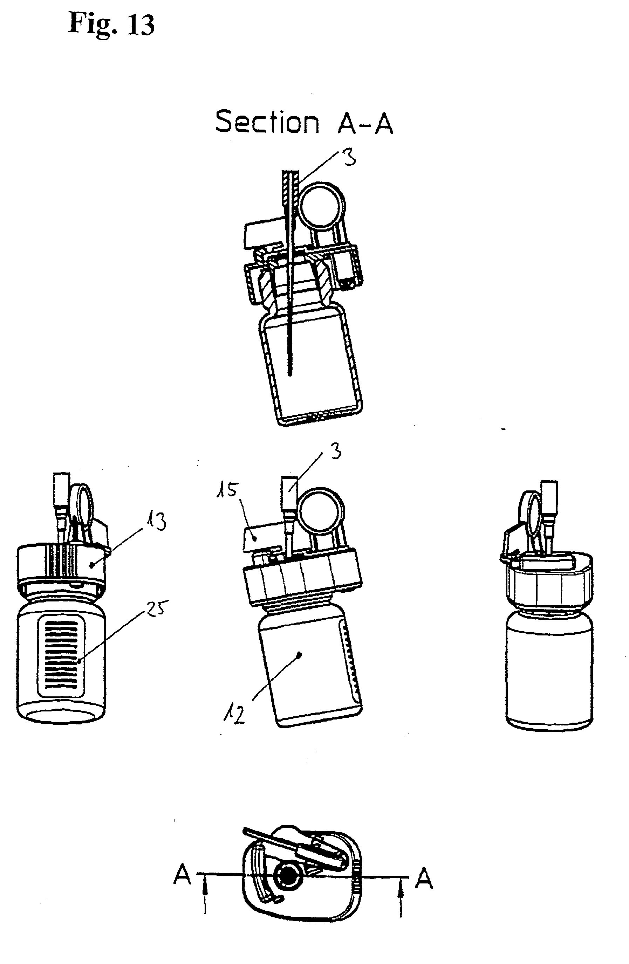

In Fig. 12 (geöffnet) und Fig. 13 (geschlossen) ist der Reagenzbehälter mit dem erfindungsgemäßen Reagenzbehälterverschluß dargestellt. Während der Reagenzbehälterverschluß aus einem oder mehreren verschiedenen Kunststoffen bestehen kann, besteht der Reagenzbehälter selbst vorzugsweise aus einem durchsichtigen Kunststoff oder Glas. Besonders vorteilhaft ist, daß Reagenzgefäße unterschiedlicher Bauform mit dem gleichen erfindungsgemäßen Reagenzbehälterverschluß verschlossen und so in einem automatischen Analysator eingesetzt werden können.

Das Öffnen und Schließen des Reagenzbehälterverschlusses wird durch den sich relativ zu dem Reagenzbehälter bewegenden Stößel (11) bewirkt, der an einen an dem zu öffnenden Verschluß angebrachten Mitnehmer (15) angreift und den Deckel an einer vorbestimmten Position öffnet. Der das Öffnen und Schließen des Reagenzbehälterverschlusses bewirkende Stößel (11) kann dabei durch die erfindungsgemäße Vorrichtung betätigt werden. Der Mitnehmer (15) ist vorzugsweise so ausgestaltet, daß er in der Endlage durch den Stößel elastisch soweit ausgelenkt werden kann, daß der Stößel(11) über die Endlage hinaus an dem Reagenzbehälter vorbeigeführt werden kann.

### Bezugszeichenliste:

- (1): drehbare Trägersäule
- (2): Tragarm
- (3): Pipettiernadel
- (4): Pipettiernadelträger, vertikal bewegbar
- (5): vertikale Führung des Pipettiernadelträgers (4)
- (6): Widerlager
- (7): Mitnehmer
- (8): Kipphebel I
- (9): Stoßstange
- (10): Kipphebel II
- (11): Stößel
- (12): Reagenzbehälter
- (13): Reagenzbehälterverschluß
- (14): Reagenzbehälterverschlußdeckel
- (15): teilelastischer Mitnehmer
- (16): Reagenzbehälterträger, horizontal beweglich
- (17): Führung für den Reagenzbehälterträger
- (18): Rückstellfeder
- (19): Reagenzbehälterverschlußkörper
- (20): Steckachse
- (21): kugelabschnittsförmige Unterschale der Dichtung
- (22): kugelabschnittsförmige Oberschale der Dichtung
- (23): Führungsnase
- (24): Führung
- (25): Barcode
- (26): Zahnriemen
- (27): Schubplatte
- (28): Schubplattenwiderlager

## Patentansprüche

1. Teil- oder vollautomatisches Analysengerät umfassend eine Vorrichtung zum Öffnen und Schließen eines Reagenzbehälterverschlusses (13), umfassend einen vertikal beweglichen Pipettiernadelträger (4) und
einen beweglichen Stößel (11), der zum Öffnen und Schließen des Reagenzbehälterverschlusses dient, indem durch eine geeignete Bewegung eines den Reagenzbehälterverschluß umfassenden Reagenzbehälters (12) relativ zum Stößel der Reagenzbehälterverschluß über einen Mitnehmer (15) geöffnet und geschlossen wird, worin der Stößel aus einer Ruheposition in eine Arbeitsposition bewegt wird, so daß er an dem Mitnehmer angreift,
**dadurch gekennzeichnet, daß** eine vertikale Bewegung des Pipettiernadelträgers oder einer Vorrichtung, welche die vertikale Bewegung des Pipettiernadelträgers hervorruft, durch ein geeignetes kraltübertragungsmittel auf den Stößel übertragen wird, der dadurch aus der Ruheposition in die Arbeitsposition bewegt wird.

2. Analysengerät gemäß Anspruch 1, worin das geeignete Mittel ein die Bewegungsrichtung umkehrendes Mittel (7, 8, 9, 10) ist.

3. Analysengerät gemäß Anspruch 1, worin die Bewegung des Pipettiernadelträgers (4) durch eine Kombination aus den Kipphebeln (8) und (19) und der Stoßstange (9) übertragen wird.

4. Analysengerät gemäß Anspruch 2, worin das die Bewegungsrichtung umkehrende Mittel ein Zugmitteltrieb, eine hydraulische Vorrichtung oder ein Bowdenzug ist.

5. Analysengerät gemäß Anspruch 4, worin der Zugmitteltrieb ein Zahnriemen ist.

6. Verfahren zum Öffnen und Schließen eines
Reagenzbehälterverschlusses (13) in einem teil- oder vollautomatischen Analysengerät, in welchem Verfahren
a) ein Stößel (11) aus einer Ruheposition in eine Arbeitsposition bewegt wird, daß er an einem an dem Reagenzbehälterverschluß angebrachten Mitnehmer (15) angreift,
b) durch eine geeignete Bewegung eines Reagenzbehälters(12) relativ zum Stößel der Reagenzbehälterverschluß zumindest soweit geöffnet wird, daß mittels einer Transferpipette ein Flüssigkeitstransfer erfolgen kann und
c) nach gegebenenfalls erfolgtem Flüssigkeitstransfer der Reagenzbehälterverschluß wieder geschlossen wird,
**dadurch gekennzeichnet, daß** eine Aufwärtsbwegung eines Pipettiernadelträgers (4) mittels eines geeigneten Kraltübertragungsmittels auf den Stößel übertragen wird, der dadurch aus der Ruheposition in die Arbeitsposition bewegt wird.

## Claims

1. Partially or fully automated analysis appliance comprising a device for opening and closing a reagent container stopper (13), comprising a vertically movable pipetting-needle carrier (4) and a movable ram (11) that serves to open and close the reagent container stopper, by means of the reagent container stopper being opened and closed via a driver (15) through a suitable movement of a reagent container (12), comprising the reagent container stopper, relative to the ram, wherein the ram is moved from a rest position to a work position such that it engages on the driver, **characterized in that** a vertical movement of the pipetting-needle carrier, or of a device that causes the vertical movement of the pipetting-needle carrier, is transferred by a suitable force-transferring means to the ram, which is thereby moved from the rest position to the work position.

2. Analysis appliance according to Claim 1, wherein the suitable means is a means (7, 8, 9, 10) that reverses the direction of movement.

3. Analysis appliance according to Claim 1, wherein the movement of the pipetting-needle carrier (4) is transferred by a combination of the rocker arms (8) and (19) and the push-rod (9).

4. Analysis appliance according to Claim 2, wherein the means reversing the direction of movement is a traction drive, a hydraulic device or a Bowden cable.

5. Analysis appliance according to Claim 4, wherein the traction drive is a toothed belt.

6. Method for opening and closing a reagent container stopper (13) in a partially or fully automated analysis appliance, in which method
a) a ram (11) is moved from a rest position to a work position, such that it engages on a driver (15) mounted on the reagent container stopper,
b) through a suitable movement of a reagent container (12) relative to the ram, the reagent container stopper is opened at least to the extent that a transfer of liquid can take place by means of a transferring pipette, and
c) if a transfer of liquid has been completed, the reagent container stopper is closed again,
**characterized in that** an upward movement of a pipetting-needle carrier (4) is transferred by a suitable force-transferring means to the ram, which is thereby moved from the rest position to the work position.

## Revendications

1. Appareil d'analyse entièrement ou partiellement automatique comprenant un dispositif pour ouvrir et pour fermer une fermeture ( 13 ) de récipient à réactif, comprenant un porte--aiguille ( 4 ) de pipetage mobile verticalement et un poussoir ( 11 ) mobile, qui sert à ouvrir et à fermer la fermeture du récipient à réactif par le fait que, par un mouvement approprié d'un récipient ( 12 ) à réactif comprenant la fermeture du récipient à réactif par rapport au poussoir, la fermeture du récipient à réactif est ouverte et fermée par un entraîneur ( 15 ), le poussoir passant d'une position de repos à une position de travail de manière à ce qu'il attaque l'entraîneur,
**caractérisé en ce qu'**un mouvement vertical du porte-aiguille de pipetage ou d'un dispositif qui provoque le mouvement vertical du porte-aiguille de pipetage est transmis, par un moyen de transmission de force appropriée, au poussoir qui passe ainsi de la position de repos à la position de travail.

2. Appareil d'analyse suivant la revendication 1, dans lequel le moyen approprié est un moyen ( 7, 8, 9, 10 ) inversant le sens du déplacement.

3. Appareil d'analyse suivant la revendication 1, dans lequel le mouvement du porte-aiguille ( 4 ) de pipetage est transmis par une combinaison de leviers ( 8 ) et ( 19 ) de basculement et de la barre ( 19 ) de poussée.

4. Appareil d'analyse suivant la revendication 2, dans lequel le moyen inversant le sens de déplacement est une transmission par traction, un dispositif hydraulique ou un câble bowden.

5. Appareil d'analyse suivant la revendication 4, dans lequel la transmission par traction est une courroie dentée.

6. Procédé pour ouvrir et pour fermer une
fermeture ( 13 ) de récipient à réactif dans un appareil d'analyse partiellement ou entièrement automatique, procédé dans lequel :
a) on fait passer un poussoir ( 11 ) d'une position de repos à une position de travail de manière à ce qu'il attaque un entraîneur ( 15 ) mis sur la fermeture du récipient à réactif,
b) par un déplacement approprié d'un récipient ( 12 ) à réactif par rapport au poussoir, on ouvre le fermeture du récipient à réactif au moins jusqu'à ce que l'on puisse effectuer un transvasement du liquide au moyen d'une pipette de transvasement et
c) après avoir effectué un transvasement du liquide le cas échéant, on referme la fermeture du récipient à réactif
**caractérisé en ce que** l'on transmet au poussoir un mouvement de soulèvement d'un porte-aiguille ( 4 ) de pipetage à l'aide d'un moyen approprié de transmission de force en le faisant passer ainsi de la position de repos à la position de travail.
